Europäisches Patentamt

European Patent Office

Office européen des brevets

(19)

(11) Veröffentlichungsnummer: **0 337 131 B1**

(12) **EUROPÄISCHE PATENTSCHRIFT**

(45) Veröffentlichungstag der Patentschrift: **04.11.92**

(21) Anmeldenummer: **89104461.2**

(22) Anmeldetag: **14.03.89**

(51) Int. Cl.⁵: **B65C 9/16**, F16H 35/02

(54) **Etikettierstation für Gegenstände, insbesondere Flaschen.**

(30) Priorität: **09.04.88 DE 3811869**
**09.04.88 DE 3823894**
**14.07.88 DE 3823893**

(43) Veröffentlichungstag der Anmeldung:
**18.10.89 Patentblatt 89/42**

(45) Bekanntmachung des Hinweises auf die
Patenterteilung:
**04.11.92 Patentblatt 92/45**

(84) Benannte Vertragsstaaten:
**AT BE CH DE ES FR GB IT LI NL**

(56) Entgegenhaltungen:
**FR-A- 2 279 623**
**FR-A- 2 344 763**

(73) Patentinhaber: **ETI-TEC MASCHINENBAU GMBH**
**Feldheider Strasse 45**
**W-4006 Erkrath 2(DE)**

(72) Erfinder: **Zodrow, Rudolf**
**Lichtstrasse 37**
**W-4000 Düsseldorf(DE)**
Erfinder: **Buchholz, Rainer**
**Brinellstrasse 27**
**W-4000 Düsseldorf(DE)**

## Beschreibung

Die Erfindung bezieht sich auf eine Etikettierstation für Gegenstände, insbesondere mit mehreren längs einer Bahn hintereinander angeordneten Stationen, und zwar einer Beleimungsvorrichtung, einer Etikettenvorratsstation und einer Etikettenübertragungsstation, sowie mit mindestens einem auf einem sich drehenden Träger drehbar gelagerten und bei jeder Umdrehung des Trägers an den Stationen vorbeibewegten Entnahmeelement für die Etiketten, das jeweils eine nach außen gewölbte, sich an den Stationen abwälzende Aufnahmefläche für das Etikett aufweist, wobei als Antrieb für jedes Entnahmeelement ein Kurvengetriebe vorgesehen ist, das aus einer für alle Entnahmeelemente gemeinsamen, ortsfesten Doppelkurvenscheibe mit in zwei Ebenen übereinander und mit Abstand voneinander angeordneten einseitigen Kurven und aus zwei Sätzen von Eingriffsgliedern besteht, die auf der Antriebswelle oder einer mit ihr gekuppelten Lagerwelle mittels eines Trägerelementes gelagert sind und durch Formschluß min den beiden Kurven bei Drehen des Trägers den Zwangslauf eines jeden Entnahmeelementes über seine volle Umdrehung sichern.

Um bei Etikettiermaschinen die Entnahmeelemente an den verschiedenen Stationen auf ihren gesamten Umlauf gleichsinnig mit unterschiedlicher Winkelgeschwindigkeit drehen zu können, sind verschiedene kurvengesteuerte Antriebe bekannt.

Bei einem ersten Antrieb (DE-C-24 36 003) werden die Entnahmeelemente jeweils von einem Paar Hebelarme angetrieben, die jeweils mit einem Eingriffsglied in einer geschlossenen Nutkurve geführt sind. Die sich teilweise überschneidenden Nutkurven liegen zum Zwecke der eindeutigen Führung der Hebelarme in verschiedenen Ebenen. Aufgrund der Führung eines jeden Eingriffsgliedes an zwei Flanken der ihm zugeordneten Nutkurve ist jedes Eingriffsglied eindeutig geführt. Die Nutkurven sind so gestaltet, daß das eine Eingriffsglied drehmomentwirksam ist, wenn sich das andere Eingriffsglied in einer Totlage befindet. Ein solcher Antrieb hat sich jedoch in der Praxis nicht durchsetzen können.

Auch ein anderer Antrieb bei einer Etikettiermaschine der eingangs genannten Art (DE-A-27 09 521) hat sich in der Praxis nicht durchsetzen können. Bei diesem Antrieb sind in zwei übereinander angeordneten Ebenen zwei Kurvenscheiben mit Außenkurven vorgesehen, denen jeweils ein Satz aus jeweils zwei Eingriffsgliedern zugeordnet ist. Die beiden Paare von Eingriffsgliedern sind auf der Ober- und Unterseite einer Scheibe um 90° gegeneinander versetzt gelagert. Die Scheibe wird von einer sich bis in die Ebene zwischen den Kurvenscheiben erstreckenden Lagerwelle getragen. Ob Vorkehrungen für eine kollisionsfreie Passage der Lagerwelle auch in den äußeren radialen Bereichen der ihr benachbarten Kurvenscheibe getroffen sind, läßt sich dem Stand der Technik nicht entnehmen.

Eine Etikettiermaschine der eingangs genannten Art mit einem anderen Antrieb hat sich dagegen in der Praxis bewährt (US-A-42 98 422). Bei dieser Etikettiermaschine ist das Kurvengetriebe als Triebstockgetriebe ausgebildet, deren beide Triebstockverzahnungen an den Innenseiten der als Ringkörper ausgebildeten Doppelkurvenscheibe angeordnet sind. Das Trägerelement, das auf seinen beiden Seiten jeweils einen Satz der als Triebstöcke ausgebildeten Eingriffsglieder trägt, ist zwischen dem beiden Triebstockverzahnungen auf dem Ende der bis hierhin reichenden Antriebswelle des Entnahmeelementes angeordnet. Damit eine kollisionsfreie Passage der Antriebswelle entlang der wellenseitigen Triebstockverzahnung möglich ist, sind die Spitzen der Zähne dieser Triebstockverzahnung abgeschnitten.

Mit einem solchen Antrieb läßt sich zwar eine ungleichförmige Eigenrotation der Entnahmeelemente erreichen, doch ist der Aufwand des Triebstockgetriebes recht hoch. Ein weiterer Nachteil besteht darin, daß der radiale Durchmesser der Triebstockverzahnungen wegen der Mindestbreite der einzelnen Zähne der Triebstockverzahnung eine Kompaktbauweise nicht ermöglicht.

Der Erfindung liegt die Aufgabe zugrunde, eine Etikettierstation der eingangs genannten Art mit einem einfacher gestalteten Antrieb zu schaffen, der darüber hinaus eine Kompaktbauweise ermöglicht.

Diese Aufgabe wird bei einer Etikettierstation der eingangs genannten Art dadurch gelöst, daß die Antriebs- bzw. Lagerwelle vor der Ebene, in der die dieser Welle näherliegende erste Kurve liegt, endet, und daß die Eingriffsglieder, die der anderen zweiten Kurve zugeordnet sind, an einem zwischen den beiden Kurven liegenden Brückenglied gelagert sind, das von am Trägerelement gehaltenen Distanzelementen getragen ist, die außerhalb des von der ersten Kurve überstrichenen Bereichs liegen. Besonders vorteilhaft ist es, wenn die ohnehin vorhandenen Eingriffsglieder die Distanzelemente umfassen.

Die erfindungsgemäße Etikettierstation kann in kompakter Bauweise und bei einfacher Gestaltung der Kurven ausgeführt werden, weil beide Kurven mit ihren Nocken bis in den Bereich der Antriebs- bzw. Lagerwelle der Eingriffsglieder reichen können. Um eine volle Umdrehung ausführen zu können, bedarf es auch nicht länger einer vielzahnigen Triebstockverzahnung, vielmehr kommt man mit vergleichsweise einfach gestalteten Kurvenscheiben und Eingriffsgliedern aus. So reicht es aus, wenn jedem Satz zwei Eingriffsglieder zugeordnet sind, die bezogen auf die Achse der Antriebs- bzw. Lagerwelle gegenüberliegend angeordnet sind, wobei die Eingriffsglieder des einen Satzes zu den Eingriffsgliedern des anderen Satzes um 90° drehversetzt sind. Die in diesem Fall für die Drehung der Entnahmeelemente bei deren Bewegung längs der drei Stationen benötigten Kurvenscheiben haben eine stetige Kontur etwa in der Form einer beidseitig in der Mitte eingeschnürten Ellipse, also eine wesentlich weniger komplizierten Kontur als die einer Triebstockverzahnung.

Der Freiraum für die bis in den Bereich der Achse der Antriebs- bzw. Lagerwelle hineinreichenden ersten Kurve läßt sich nach einer Ausgestaltung der Erfindung dadurch verwirklichen, daß bei Zapfen aufweisenden Eingriffsgliedern, das Brückenglied auf seiner einen Seite von den der ersten Kurve zugeordneten Zapfen getragen ist und auf seiner anderen Seite die der zweiten Kurve zugeordneten Zapfen trägt. Vorzugsweise sind auf den Zapfen Rollen drehbar gelagert.

Um einerseits die Geräusche zu dämpfen und andererseits Toleranzen auszugleichen, ist es bei der eingangs behandelten Etikettierstation bekannt, in den Rollen der Triebstöcke eine Einlage aus elastischem Dämpfungsmaterial vorzusehen. Eine derartige Art der Dämpfung ist für das Kurvengetriebe der Erfindung nicht optimal, weil die Belastung der auf Zapfen gelagerten Rollen der Eingriffsglieder wegen der kleinen Fläche der Einlage zu groß wäre. Während beim Stand der Technik gleichzeitig mindestens zwei Rollen im Eingriff sind, ergeben sich bei der Erfindung, wenn nur vier Eingriffsglieder vorgesehen sind, Phasen, in denen von jedem Satz nur ein Eingriffsglied mit der Kurve im Eingriff ist. Die Belastung dieses Eingriffsgliedes ist entsprechend groß. Wegen der aus Gründen der präzisen Führung nur sehr dünnen Einlage, kann es bei dieser großen Belastung dazu kommen, daß die Dämpfungswirkung ganz verlorengeht. Hinzu kommt, daß bei einer an jedem Eingriffglied einzeln verwirklichten Dämpfung eine bei Belastung entstehende Exzentrizität des einzelnen Eingriffsgliedes sich negativ auf die gewünschte präzise Drehbewegung des Entnahmeelementes auswirkt.

Um einerseits diese Nachteile zu vermeiden und andererseits eine Dämpfung zu erreichen, ist nach einer weiteren Ausgestaltung der Erfindung vorgesehen, daß das Trägerelement der Eingriffsglieder aus einem äußeren, die Eingriffsglieder tragenden Körper und einem damit über eine Einlage aus elastischem Dämpfungsmaterial verbundenen inneren Körper besteht, wobei die beiden Körper im Bereich der Einlage mit radial gerichteten Klauen formschlüssig ineinander greifen. Bei dieser Ausgestaltung der Erfindung ist die geometrische Zuordnung der Eingriffsglieder zueinander starr. Das bedeutet, daß sie sich nur gemeinsam als Einheit exzentrisch auf der Welle verlagern können.

Für eine präzise Drehbewegung wirkt sich diese Art der Verlagerung weniger negativ aus als die Einzelversetzungen der Eingriffsglieder, da die Eingriffsverhältnisse zwischen den Eingriffsgliedern und den Kurven im wesentlichen erhalten bleiben.

Anstelle der Entkopplung der Eingriffsglieder oder auch zusammen mit den Eingriffsgliedern ist es auch möglich, daß das die Eingriffsglieder tragende Trägerelement aus einem ein Antriebsritzel für die Antriebswelle tragenden äußeren Körper und einem damit über eine Einlage aus elastischem Dämpfungsmaterial verbundenen inneren Körper besteht, wobei die beiden Körper im Bereich der Einlage mit radial gerichteten Klauen formschlüssig ineinandergreifen.

Nach einer weiteren Ausgestaltung der Erfindung ist die mit Außenkurven versehene Doppelkurvenscheibe innerhalb der Umlaufbahn der Eingriffsglieder angeordnet und über eine unterhalb der Eingriffsglieder angeordnete Trägerbrücke starr mit dem Maschinengestell verbunden.

Die spezielle Konstruktion des Kurvenantriebes erlaubt eine Geometrie, die nicht nur zu einem kompakten Aufbau, sondern auch zu einer optimalen Verteilung der Belastung der Kurve führt. In diesem Sinne ist nach einer Ausgestaltung der Erfindung vorgesehen, daß von den radialen Extrempunkten der beiden die Eingriffsglieder tragenden Kurven zwei Extrempunkte in dem zwischen dem Greiferzylinder und der Leimwalze liegenden Sektor und jeweils ein weiterer Extrempunkt in den zwischen dem Greiferzylinder, dem Etikettenkasten und der Leimwalze liegenden Sektoren liegen. Dabei liegt vorzugsweise mindestens einer der Extrempunkte außerhalb der Mittelpunktsbahn des Trägerelementes der Eingriffsglieder.

Nach einer weiteren geometrischen Ausgestaltung der Erfindung stehen bei einem zwischen der Antriebswelle des Entnahmeelementes und dem Trägerelement angeordneten Übersetzungsgetriebe und außerhalb der Mittelpunktsbahn des Trägerelementes angeordneten Achse der Antriebswelle des Entnahmeelementes sowie mittiger Stellung des Entnahmeelementes vor dem Etikettenkasten ein Eingriffsgliederpaar mit beiden Eingriffsgliedern im Eingriff mit der Kurve. Bei dieser Ausgestaltung haben beide Eingriffsglieder des Eingriffsgliederpaares bereits eine tragende Funktion, wenn das eine Eingriffsglied des anderen Eingriffsgliederpaares dabei ist, seine tragende Funktion zu verlieren.

Für die kompakte Bauweise ist weiter von Vorteil, wenn das Verhältnis des Radius der Mittelpunktsbahn des Trägerelementes zum Radius des Laufkreises der Eingriffsglieder auf dem Trägerelement etwa 3 zu 1 beträgt.

Schließlich hat sich als günstig erwiesen, wenn die von den Eingriffsgliedern beschriebenen nichttragenden Kurvenbahnen zum größeren Teil außerhalb der Mittelpunktsbahn der Antriebswelle des Entnahmeelementes liegen.

Die Forderungen nach kompaktem Aufbau, Laufruhe und Lebensdauer unter Berücksichtigung der von den Außenkurven abzuleitenden Verzögerung und Beschleunigung der Drehbewegung der Entnahmeelemente lassen sich durch weitere geometrische Beziehungen des Kurvengetriebes und der Lage der einzelnen Bauteile optimieren.

Zu diesem Zweck liegen die Extrempunkte auf einer der beiden Außenkurven auf vom Trägermittelpunkt ausgehenden radialen Strahlen, die einen stumpfen Winkel einschließen, wobei von den in den einander überdeckenden Bereichen der beiden Außenkurven gebildeten Zähnen, mit denen jeweils gleichzeitig die Engriffsglieder beider Sätze zusammenwirken, die schmaleren Zähne innerhalb des stumpfen Winkels liegen. Vorzugsweise liegt dieser stumpfe Winkel zwischen 120° bis 160°, insbesondere bei 140°. Darüber hinaus liegen die Extrempunkte der anderen Außenkurve vorzugsweise mindestens annähernd auf einer durch den Trägermittelpunkt verlaufenden Geraden.

Bei einer derart aufgebauten Etikettiermaschine ist gewährleistet, daß sie neben einem kompakten Aufbau für die Entnahmeelemente einen optimalen Antrieb aufweist, denn am gesamten Umfang werden die Eingriffsglieder von den Außenkurven unter Berücksichtigung der erforderlichen Drehbewegung optimal geführt. Die Außenkurven sind so gestaltet, daß die für die Beschleunigung erforderlichen Kräfte unter Berücksichtigung der an den einzelnen Stationen erforderlichen Drehbewegungen möglichst optimal verteilt sind. So ist es im Rahmen der Erfindung möglich, die Kurve derart zu gestalten, daß die Winkelgeschwindigkeit eines jeden Entnahmeelementes im Abwälzbereich der Stationen nur ein Maximum und in dem dazwischenliegenden Zwischenbereich nur ein Minimum erreicht. Die Maxima und Minima sollten vorzugsweise jeweils in der Mitte des Abwälzbereichs bzw. Zwischenbereichs liegen, wobei die minimale Winkelgeschwindigkeit in den Zwischenbereichen kleiner als die halbe maximale Winkelgeschwindigkeit in den Abwälzbereichen sein sollte. Sofern die Winkelgeschwindigkeit im Bereich des Greiferzylinders am größten ist, kann ein Vorlauf erreicht werden, der das Ablösen des Etiketts von der beleimten Fläche des Entnahmeelementes begünstigt.

Vorzugsweise sind die Außenkurven so gestaltet, daß in den Zwischenbereichen die in den Abwälzbereichen begonnene Drehbewegung fortgesetzt wird, allerdings mit unterschiedlicher Winkelgeschwindigkeit, so daß das Entnahmeelement in der richtigen Winkelstellung die nächste Station erreicht, ohne daß es in diesem Zwischenbereich zu extremen Beschleunigungen oder Verzögerungen kommt. So ist es möglich, die Geschwindigkeit bis auf 0 zu verringern oder sogar bis über 0 hinaus zu verzögern (Drehrichtungsumkehr).

Nach einer weiteren Ausgestaltung der Erfindung ist der Abstand der Abstützpunkte der Eingriffsglieder an den Flanken eines von den einander überdeckenden Bereichen der beiden Außenkurven gebildeten schmalen Zahns bei senkrechter Lage der durch die Mittelpunkte der am Zahn abgestützten Eingriffsglieder verlaufenden Verbindungslinie zu dem vom Trägermittelpunkt ausgehenden und durch die Spitze des Zahns verlaufenden radialen Strahls um 30 bis 40 % kleiner als der entsprechende Abstand bei einem entsprechenden breiten Zahn.

Weitere Merkmale zur Optimierung der Geometrie bestehen darin, daß die Extrempunkte der beiden Außenkurven auf einem Kreis um den Trägermittelpunkt liegen, daß die innerhalb des Kreises für die Extrempunkte liegenden Spitzen der Zähne von den einander überdeckenden Bereichen der Außenkurven gebildeten Zähne einen unterschiedlichen radialen Abstand von dem Kreis- beziehungsweise Trägermittelpunkt haben, daß der radiale Abstand der Spitzen der schmalen Zähne etwa gleich ist, daß der radiale Abstand der Spitzen der breiten Zähne etwa gleich ist und daß der radiale Abstand der Spitzen der schmalen Zähne größer als der der breiten Zähne ist.

Im folgenden wird die Erfindung anhand einer ein Ausführungsbeispiel darstellenden Zeichnung näher erläutert. Im einzelnen zeigen

| | |
|---|---|
| Fig. 1 | eine Etikettierstation in schematischer Darstellung in Draufsicht, |
| Fig. 2 | ein Kurvengetriebe für ein Entnahmeelement in schematischer Darstellung in Draufsicht, |
| Fig. 3 | das Kurvengetriebe gemäß Figur 2 im Axialschnitt nach der Linie I-I der Figur 2, |
| Fig. 4 bis 6 | die Etikettierstation gemäß Fig. 1 in Draufsicht und reduzierter Darstellung mit herausgehoben dargestellten Außenkurven, |
| Fig. 7 | die Außenkurve der Etikettierstation gemäß Fig. 1 mit den durch die Überdeckung der Außenkurven gebildeten Zähnen, |
| Fig. 8 | die Etikettierstation gemäß Fig. 1 in einer etwas abgewandelten Ausführung in Draufsicht und reduzierter Darstellung mit herausgehoben dargestellten Kurven, |
| Fig. 9 | die Außenkurven der Etikettierstation gemäß Fig. 6 mit den durch die Überdeckung der Au- |

ßenkurven gebildeten Zähnen **und**

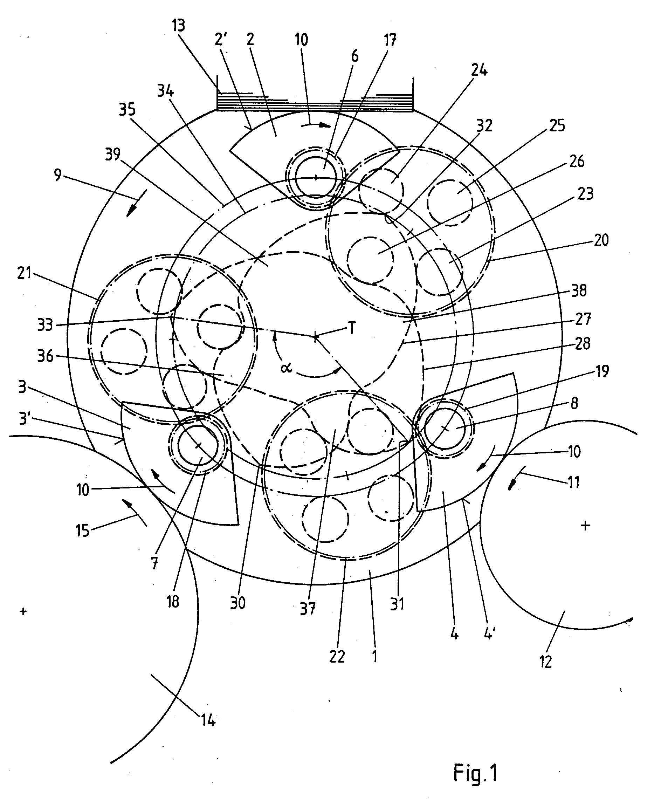

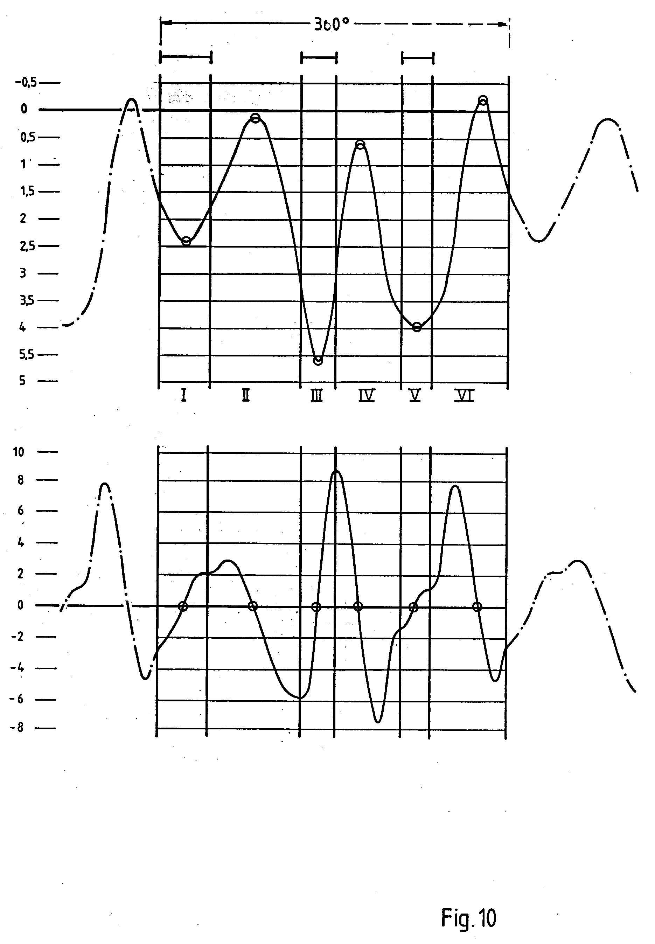

Fig. 10 ein Diagramm für die Winkelgeschwindigkeit und Winkelbeschleunigung der Entnahmeelemente einer Etikettierstation gemäß Figur 1 mit drei Entnahmeelementen und drei Übertragungsbereichen am Greiferzylinder.

Die in den Figuren 1 bis 5 dargestellte Etikettierstation besteht aus einem tellerförmigen Träger 1, auf dem unter gleichen Winkeln drei Entnahmeelemente 2,3,4 angeordnet sind. Jedes Entnahmeelement 2,3,4 weist eine zylindrisch gekrümmte Aufnahmefläche 2',3',4' für ein Etikett auf und ist zwischen dieser und deren Krümmungsmittelpunkt mit einer Antriebswelle 6,7,8 im Träger 1 gelagert. Bei Drehung des Trägers 1 in Richtung des Pfeils 9 drehen sich zwangsläufig durch einen noch zu beschreibenden Antrieb die Entnahmeelemente 2,3,4 in Richtung des Pfeils 10, also gegensinnig zum Träger 1.

Bei dieser Drehung des Trägers 1 werden die Entnahmeelemente 2,3,4 an verschiedenen Stationen, und zwar einer in Richtung des Pfeils 10 rotierenden Leimwalze 12, einem feststehenden Etikettenkasten 13 mit einem darin befindlichen Stapel von Etiketten und einem in Richtung des Pfeils 15 rotierenden Greiferzylinder 14 unter Ausführung einer Abwälzbewegung an den einzelnen Stationen vorbeibewegt. Dabei wird zunächst die Aufnahmefläche 2',3',4' eines jeden Entnahmeelementes 2,3,4 durch die Leimwalze 12 beleimt. Beim Abwälzen an dem vorderen Etikett des im Etikettenkasten 13 befindlichen Etikettenstapels wird das vordere Etikett infolge der Haftwirkung des Leims an der Aufnahmefläche 2',3',4' dem Etikettenstapel entnommen und bei weiterer Drehung des Trägers 1 dem Greiferzylinder 14 zugeführt, der es von der Aufnahmefläche 2',3',4' abnimmt und auf hier nicht dargestellte, an ihm vorbeibewegte Gegenstände, wie Flaschen, überträgt.

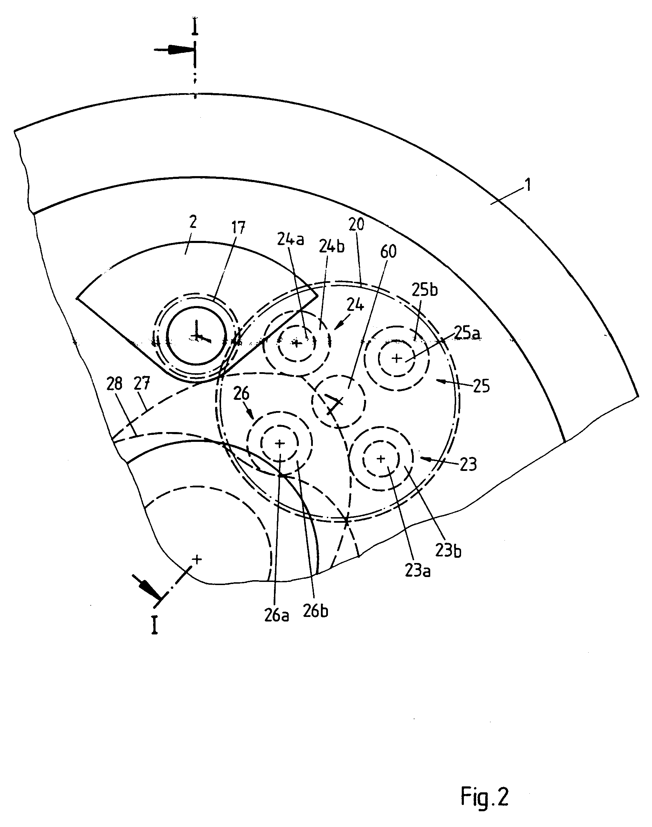

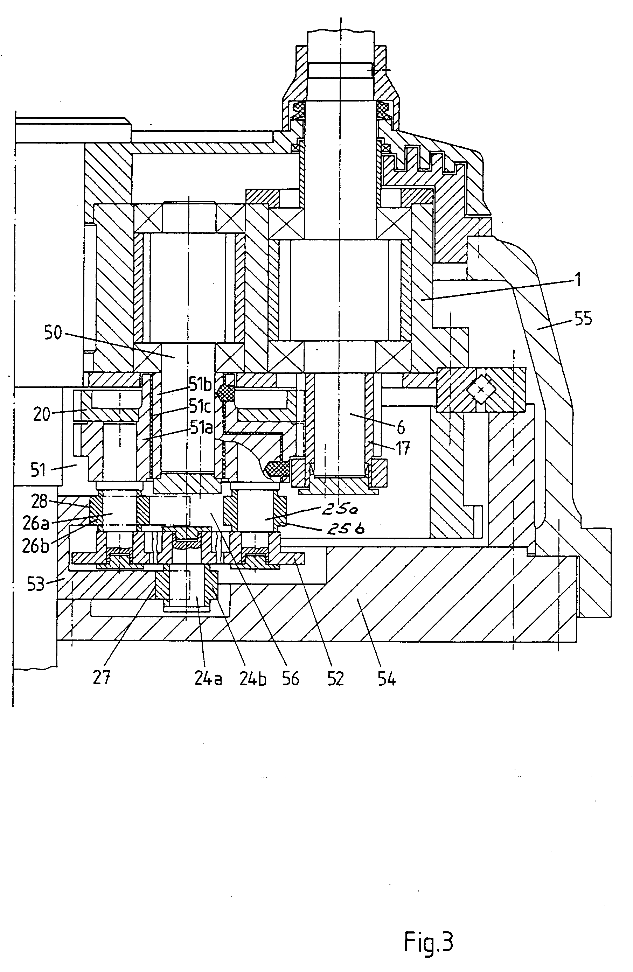

Damit an den verschieden gestalteten Stationen 10,11,12 die Aufnahmefläche 2',3',4' sich abwälzen kann, ist es erforderlich, daß die Eigenrotation eines jeden Entnahmeelementes 2,3,4 in Richtung des Pfeils 9 beschleunigt und verzögert wird. Für diesen Zweck ist jedes Entnahmeelement 2,3,4 über ein auf seiner Antriebswelle 6,7,8 sitzendes Ritzel 17,18,19 mit einem größeren Zahnrad 20,21,22 verbunden, das in Drehrichtung hinter dem zugehörigen Entnahmeelement 2,3,4 mittels einer in Fig.2 und 3 dargestellten Lagerwelle im Träger 1 gelagert ist.

Das größere Zahnrad 20,21,22 ist Teil eines Kurvengetriebes. Jedes dieser Kurvengetriebe hat den gleichen Aufbau, so daß im folgenden die Beschreibung auf ein Kurvengetriebe beschränkt werden kann.

Das aus zwei gegeneinander zum Zwecke der Spielbeseitigung verdrehbaren und feststellbaren Zahnrädern bestehende größere Zahnrad 20 ist Teil eines Trägerelementes 51, das auf dem unteren Ende der im Träger 1 gelagerten Lagerwelle 50 sitzt. Das Trägerelement 51 besteht aus einem äußeren Körper 51a und einem inneren Körper 51b. Die beiden Körper 51a,51b weisen radial gerichtete Klauen auf, die ineinandergreifen und zwischen denen vollflächig eine dünne elastische Einlage 51c aus Dämpfungsmaterial angeordnet ist.

Das Zahnrad 20 ist starr mit dem äußeren Körper 51a verbunden, an dessen Unterseite zwei diametral gegenüberliegende Eingriffsglieder aus einem Lagerzapfen 25a,26a und einer darauf drehbar gelagerten Rolle 25b,26b befestigt sind. Wegen der elastischen Zwischenlage 51c zwischen dem äußeren Körper 51a und dem inneren Körper 51b ergibt sich somit für das Zahnrad 20 und die Eingriffsglieder 25a,25b,26a,26b eine Entkopplung.

Die Lagerzapfen 25a,26a tragen an ihrer Unterseite ein Brückenglied 52 in Form eines Ringes, an dessen unterer Seite zwei diametral gegenüberliegende und um 90° zu den Eingriffsgliedern 25a,25b,26a,26b versetzte Eingriffsglieder, die ebenfalls aus einem Lagerzapfen 23a, 24a und darauf angeordneter Rolle 23b,24b bestehen, befestigt sind.

Den beiden Sätzen von Eingriffsgliedern 23a,23b,24a,24b,25a,25b,26a,26b ist eine Doppelkurvenscheibe 53 mit zwei äußeren Kurven 27,28 zugeordnet. Diese Doppelkurvenscheibe 53 ist über eine Trägerbrücke 54 mit dem Maschinengestell 55 der Etikettierstation starr verbunden. Die Außenkurven 27,28 haben die Form von an beiden Längsseiten eingebuchteten Ovalen und sind zueinander kreuzweise angeordnet.

Wie in Fig. 2 dargestellt und in Fig. 3 strichpunktiert angedeutet ist, liegen die Außenkurven 27,28 in Teilabschnitten im Bereich der Achse der Lagerwelle 50. Da aber durch die Konstruktion mit dem zwischen den Außenkurven 27, 28 liegenden Brückenglied 52 im Bereich der Außenkurve 27 in der Mitte zwischen den Eingriffsgliedern 25a,25b,26a,26b ein wellenfreier Raum 56 geschaffen worden ist und im Bereich der unteren Außenkurve 27 die Antriebs-oder Lagerwelle 50 ohnehin nicht durchgezogen zu werden brauchte, können die Außenkurven 27, 28 über ihre gesamte Länge optimal gestaltet und der gesamte Antrieb mit geringem Aufwand an Bauelementen kompakt gestaltet werden. An jeder Stelle der Außenkurven sind mindestens ein Eingriffsglied drehmoment wirksam und mindestens ein Eingriffsglied abstützend wirksam, so daß sich immer eine definierte Drehstellung für das Entnahmeelement ergibt.

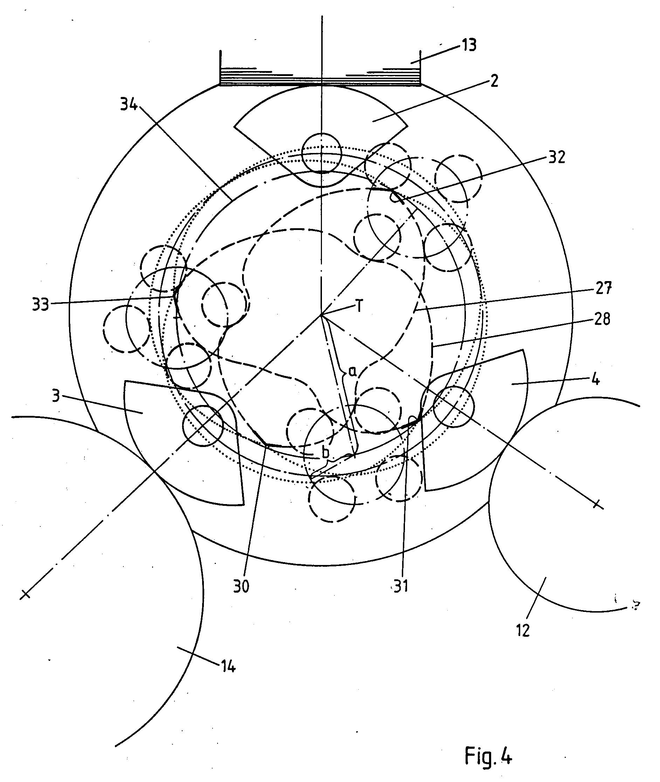

Wie die Fig. 4 - 6 zeigen, ergibt sich aus der Anordnung der drei Stationen, und zwar der Leimwalze 12, dem Etikettenkasten 13 und dem Greiferzylinder 14 eine Aufteilung des Trägers 1 in drei Sektoren. In der Zeichnung werden diese Sektoren durch die durch die Mitte der Stationen 12,13,14 gehenden strichpunktierten Linien begrenzt. In dem Sektor zwischen der Leimwalze 12 und dem Greiferzylinder 14 liegen zwei Extrempunkte 30,31 der Außenkurven 27,28, während in den Sektoren zwischen der Leimwalze 12 und dem Etikettenkasten 13 einerseits und dem Etikettenkasten 13 und dem Greiferzylinder 14 andererseits jeweils ein Extrempunkt 32,33 der Außenkurven 27,28 liegen. Sämtliche Extrempunkte 30,31,32,33 liegen praktisch auf der Mittelpunktsbahn 34, die durch die Achsen der nicht dargestellten Lagerwellen mit deren Trägerelementen für die Eingriffsglieder 23, 24, 25, 26 vorgegeben ist. Lediglich der Extrempunkt 33 liegt etwas außerhalb dieser Mittelpunktsbahn 34. Der Radius a der Mittelpunktsbahn 34 zum Radius b des Laufkreises der Eingriffsglieder 23, 24, 25, 26 beträgt vorzugsweise 3 zu 1. Das Übersetzungsverhältnis zwischen dem Ritzel 17, 18, 19 und dem damit im Eingriff stehenden größeren Zahnrad 20, 21, 22 beträgt vorzugsweise 1 zu 3.

Wie die Fig. 4 - 6 ferner zeigen, ergeben sich die Extrempunkte 30, 31, 32, 33 der Außenkurven 27, 28 dadurch, daß sich jede Außenkurve aus zwei überschneidenden Kurven zusammensetzt. Während die ausgebildeten Kurvenabschnitte gestrichelt dargestellt sind, sind die diese Kurvenabschnitte ergänzenden, nicht ausgebildeten Kurvenabschnitte punktiert dargestellt.

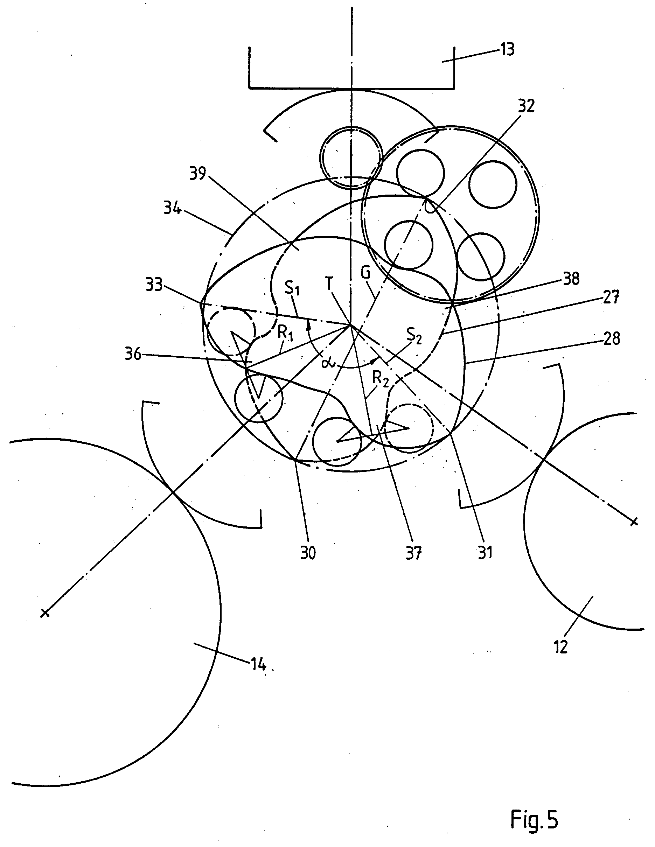

In den Figuren 5 bis 7 sind vor allem die geometrischen Verhältnisse der beiden höhen- und drehversetzten, im wesentlichen ein beidseits eingebuchtetes Oval bildenden Außenkurven 27, 28 dargestellt.

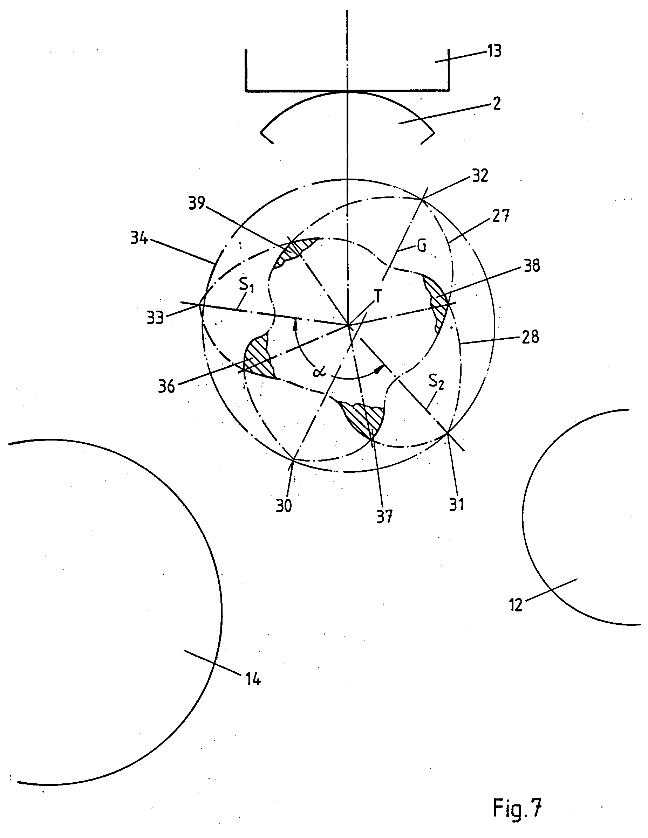

Figur 7 zeigt vor allem die von den beiden Außenkurven 27, 28 im Überdeckungsbereich gebildeten Zähne 36 bis 38. Während die schmaleren Zähne 36, 37 innerhalb eines stumpfen Winkels $\alpha$ liegen, der von vom Trägermittelpunkt T ausgehenden und durch die Extrempunkte 31, 33 der Außenkurve 28 verlaufenden radialen Strahlen $S_1$, $S_2$ begrenzt wird, liegen die Extrempunkte 30, 32 der anderen Außenkurve 27 auf einer Geraden G, die annähernd durch den Trägermittelpunkt T verläuft.

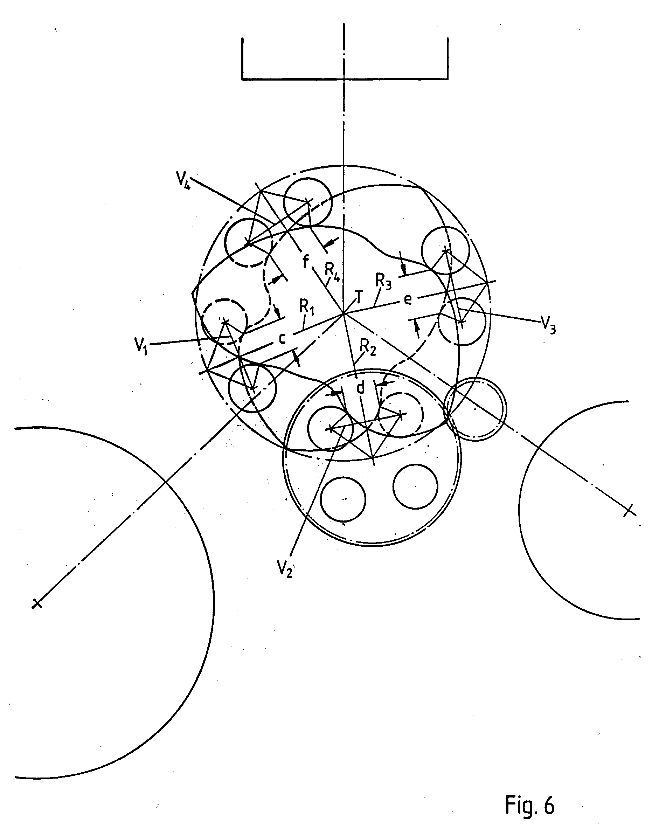

Wie vor allem Figur 6 zeigt, wirken mit den im Überdeckungsbereich der beiden Außenkurven 27, 28 gebildeten Zähnen 36 bis 39 die Eingriffsglieder 23 bis 26 zusammen. Der Abstand c, d der Abstützpunkte der Eingriffsglieder an den Flanken eines schmalen Zahns 36, 37 bei senkrechter Lage der durch die Mittelpunkte der Eingriffsglieder verlaufenden Verbindungslinie $V_2$, $V_3$ zu dem vom Trägermittelpunkt T ausgehenden und durch die Spitze des entsprechenden Zahns 36, 37 verlaufenden radialen Strahlen $R_2$, $R_3$ ist um 30 bis 40 % kleiner als der Abstand e, f der Abstützpunkte der Eingriffsglieder an den Flanken eines breiten Zahns 38, 39 bei senkrechter Lage der durch die Mittelpunkte der Eingriffsglieder verlaufenden Verbindungslinie $V_3$, $V_4$ zu dem vom Trägermittelpunkt T ausgehenden und durch die Spitze des entsprechenden Zahns 38, 39 verlaufenden radialen Strahl $R_3$, $R_4$.

Den Figuren 5 - 7 ist ferner zu entnehmen, daß einerseits die Spitzen der schmalen Zähne 36, 37 und andererseits die Spitzen der breiten Zähne 38, 39 jeweils den gleichen radialen Abstand vom Trägermittelpunkt T haben, daß der radiale Abstand der schmaleren Zähne 36, 37 aber größer als der der breiten Zähne 38, 39 ist.

Im Diagramm der Figur 10 ist oben die Winkelgeschwindigkeit des Entnahmeelementes und unten dessen Winkelbeschleunigung bei einer Drehung des Entnahmeelementträgers um 360° über dessen Umfang dargestellt. Mit I, III, V sind die Abwälzbereiche am Etikettenkasten, am Greiferzylinder und an der Leimwalze und mit II, IV, VI die dazwischenliegenden Zwischenbereiche bezeichnet. Das Diagramm zeigt, daß in allen Bereichen die Winkelgeschwindigkeit nur ein Maximum oder ein Minimum hat, wobei die Maxima in den Abwälzbereichen I, III, V und die Minima in den Zwischenbereichen II, IV, VI liegen. In dem Zwischenbereich VI, also dem Bereich zwischen Leimwalze 12 und Etikettenkasten 13 geht die Winkelgeschwindigkeit sogar ins Negative, was bedeutet, daß die Drehrichtung für kurze Zeit sich umkehrt. Dadurch, daß die Kurven so gestaltet sind, daß die Maxima und Minima jeweils etwa im mittleren Teil der einzelnen Bereiche liegen, ergibt sich eine Optimierung für den Bewegungsablauf. Aus dem Beschleunigungsdiagramm läßt sich entnehmen, daß in den Abwälzbereichen I und V, wo im gesamten Bereich abgewälzt wird, die Beschleunigung und damit auch die Belastung wesentlich kleiner als in den benachbarten Bereichen ist. Nur im Bereich des Greiferzylinder ist die Beschleunigung etwa gleich groß wie in den Nachbarbereichen, doch ist zu berücksichtigen, daß hier nicht eine wirkliche Abwälzung zweier Flächen aufeinander über den gesamten Bereich stattfindet, sondern nur ein Mitlaufen.

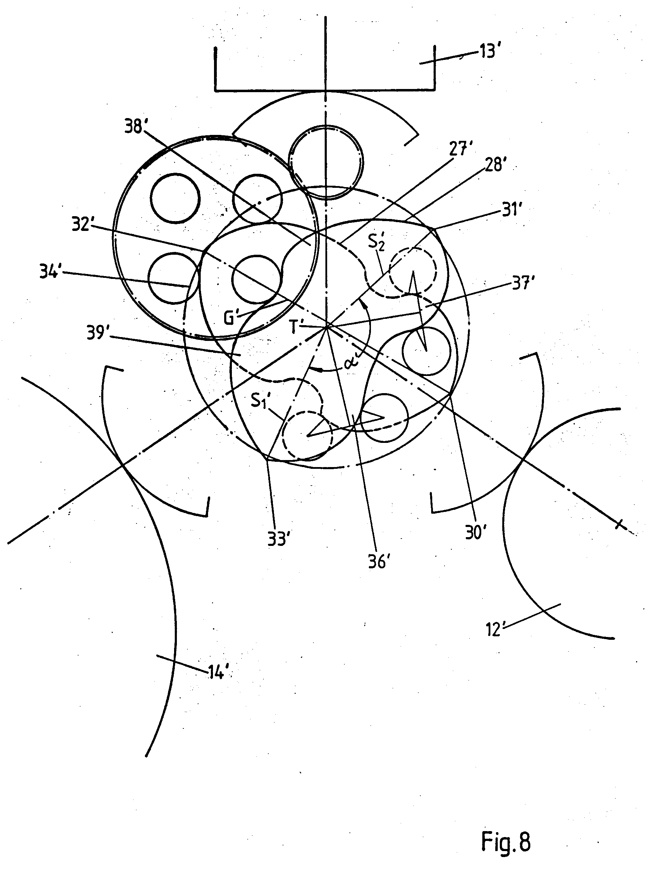

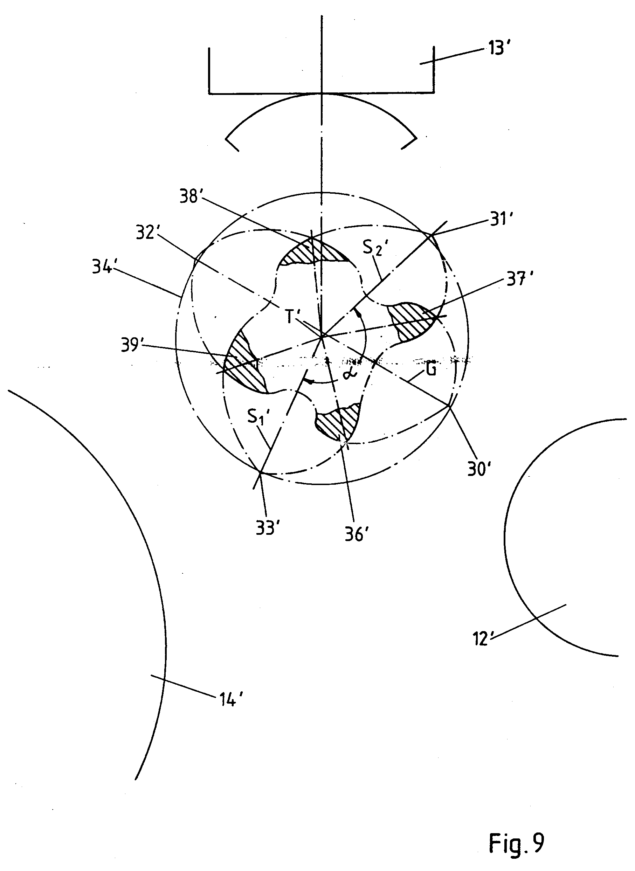

Die Etikettierstation gemäß den Figuren 8 und 9 unterscheidet sich von derjenigen der Figuren 1 bis 7 allein darin, daß das Trägerelement mit den Eingriffsliedern bezogen auf das Entnahmeelement vorlaufend ist und ein Greiferzylinder mit einem größeren Durchmesser vorgesehen ist. Die Darstellung der Figuren 6 und 7 entspricht derjenigen der Figuren 3 und 5 der Etikettierstation gemäß Figur 1. Da die Verhältnisse hinsichtlich der Formgebung der Außenkurven prinzipiell gleich sind, erübrigt sich eine weitere Erläuterung. Die sich entsprechenden Bauteile sind mit den gleichen Bezugszeichen und einem zusätzlichen Strich versehen.

## Patentansprüche

1. Etikettierstation für Gegenstände, insbesondere Flaschen, mit mehreren längs einer Bahn hintereinander angeordneten Stationen, und zwar einer Beleimungsvorrichtung (12), einer Etikettenvorratsstation (13) und einer Etikettenübertragungsstation (14), sowie mit mindestens einem auf einem sich drehenden Träger (1) drehbar gelagerten und bei jeder Umdrehung des Trägers (1) an den Stationen (12,13,14) vorbeibewegten Entnahmeelement (2,3,4) für die Etiketten, das jeweils eine nach außen gewölbte, sich an den Stationen (12,13,14) abwälzende Aufnahmefläche (2',3',4') für das Etikett aufweist, wobei als Antrieb für jedes Entnahmeelement (2,3,4) ein Kurvengetriebe vorgesehen ist, das aus einer für alle Entnahmeelemente (2,3,4) gemeinsamen, ortsfesten Doppelkurvenscheibe (53) mit in zwei Ebenen übereinander und mit Abstand voneinander angeordneten einseitigen Kurven (27,28) und aus zwei Sätzen von Eingriffsgliedern (23,24,25,26) besteht, die auf der Antriebswelle (6,7,8) oder einer mit ihr gekuppelten Lagerwelle (50 mittels eines Trägerelements (51) gelagert sind und durch Formschluß mit den beiden Kurven (27,28) bei Drehung des Trägers (1) den Zwanglauf eines jeden Entnahmeelements (2,3,4) über seine volle Umdrehung sichern, **dadurch gekennzeichnet,** daß die Antriebs- bzw. Lagerwelle (50) vor der Ebene, in der die dieser Welle (50) näherliegende erste Kurve (28) liegt, endet, und daß die Eingriffsglieder (23,24), die der anderen zweiten Kurve (27) zugeordnet sind, an einem zwischen den beiden Kurven (27,28) liegenden Brückenglied (52) gelagert sind, das von am Trägerelement (51) gehaltenen Distanzelementen (25a,26a) getragen ist, die außerhalb des von der ersten Kurve (28) überstrichenen Bereichs (56) liegen.

2. Etikettierstation nach Anspruch 1, **dadurch gekennzeichnet,** daß die Eingriffsglieder (25,26) der ersten Kurve (28) die Distanzelemente (25a,26a) umfassen.

3. Etikettierstation nach Anspruch 1 oder 2, **dadurch gekennzeichnet,** daß jedem Satz zwei Eingriffsglieder (23,24,25,26) zugeordnet sind, die bezogen auf die Achse der Antriebs- bzw. Lagerwelle (50) gegenüberliegend angeordnet sind, wobei die Eingriffsglieder (23,24) des einen Satzes zu den Eingriffsgliedern (25,26) des anderen Satzes um 90° drehversetzt sind.

4. Etikettierstation nach einem der Ansprüche 1 bis 3, **dadurch gekennzeichnet,** daß bei Zapfen (25a,26a) aufweisenden Eingriffsgliedern (25,26) das Brückenglied (52) auf seiner einen Seite von den der ersten Kurve (28) zugeordneten Zapfen (25a,26a) getragen ist und auf seiner anderen Seite die der zweiten Kurve (27) zugeordneten Zapfen (23a,24a) trägt.

5. Etikettierstation nach Anspruch 4, **dadurch gekennzeichnet,** daß auf den Zapfen (23a,24a,25a,26a) Rollen (23b,24b,25b,-26b) gelagert sind.

6. Etikettierstation nach einem der Ansprüche 1 bis 5, **dadurch gekennzeichnet,** daß die mit Außenkurven (27,28) versehene Doppelkurvenscheibe (53) innerhalb der Umlaufbahn mit den Eingriffsgliedern (23,24,25,26) angeordnet ist und über eine unterhalb der Eingriffsglieder (23,24,25,26) angeordnete Trägerbrücke (54) mit dem Maschinengestell (55) verbunden ist.

7. Etikettierstation nach einem der Ansprüche 1 bis 6, **dadurch gekennzeichnet,** daß das Trägerelement (51) der Eingriffsglieder (23,24,25,26) aus einem die Eingriffsglieder (23,24,25,26) tragenden äußeren Körper (51a) und einem damit über eine Einlage (51c) aus elastischem Dämpfungsmaterial verbundenen inneren Körper (51b) besteht, wobei die beiden Körper (51a,51b) im Bereich der Einlage (51c) mit radial gerichteten Klauen formschlüssig ineinandergreifen.

8. Etikettierstation nach Anspruch 7, **dadurch gekennzeichnet,** daß der die Eingriffsglieder (23,24,25,26) tragende äußere Körper (51a) ein Antriebsritzel (20) trägt.

9. Etikettierstation nach einem der Ansprüche 1 bis 8, **dadurch gekennzeichnet,** daß von den radialen Extrempunkten (30,31,32,33) der beiden Außenkurven (27,28) zwei Extrempunkte (30,31) in dem zwischen dem Greiferzylinder (14) und der Leimwalze (12) liegenden Sektor und jeweils ein Extrempunkt (32,33) in den zwischen der als Greiferzylinder (14) ausgebildeten Etikettenübertragungsstation, der als Etikettenkasten (11) ausgebildeten Etikettenvorratsstation und der als Leimwalze (10) ausgebildeten Beleimungsvorrichtung liegenden Sektoren liegen.

10. Etikettierstation nach einem der Ansprüche 1 bis 9,
**dadurch gekennzeichnet,** daß mindestens einer der Extrempunkte (30,31,32,33) der beiden Außenkurven (27,28) außerhalb der Mittelpunktsbahn (34) des Trägerelementes (51) der Eingriffsglieder (23,24,25,26) liegt.

11. Etikettierstation nach einem der Ansprüche 1 bis 10,
**dadurch gekennzeichnet,** daß bei einem zwischen der Antriebswelle (6) des Entnahmeelementes (2) und dem Trägerelement (51) angeordneten Übersetzungsgetriebe, insbesondere mit einem Übersetzungsverhältnis von 1 zu 3 und bei außerhalb der Mittelpunktsbahn (34) des Trägerelementes (51) angeordneter Achse der Antriebswelle (6) des Entnahmeelementes (2) sowie bei mittiger Stellung des Entnahmeelementes vor der als Etikettenkasten (11) ausgebildeten Etikettenvorratsstation ein Eingriffsgliederpaar (23,24) mit beiden Eingriffsgliedern (23,24) in Eingriff mit der Außenkurve (27) steht.

12. Etikettierstation nach einem der Ansprüche 1 bis 11,
**dadurch gekennzeichnet,** daß das Verhältnis des Radius (a) der Mittelpunktsbahn (34) des Trägerelementes (51) zum Radius (b) des Laufkreises der Eingriffsglieder (23,24,25,26) auf dem Trägerelement (51) 3 zu 1 beträgt.

13. Etikettierstation nach einem der Ansprüche 1 bis 12,
**dadurch gekennzeichnet,** daß die von den Eingriffsgliedern (23,24,25,26) beschriebenen nichttragenden Kurvenbahnabschnitte der Kurven (27,28) zum größeren Teil außerhalb der Mittelpunktsbahn (5) der Antriebswelle (6) des Entnahmeelementes (2) liegen.

14. Etikettierstation nach einem der Ansprüche 1 bis 13,
**gekennzeichnet durch** folgende Merkmale:
a) Die Extrempunkte (31,33) auf einer der beiden Außenkurven (27,28) liegen auf vom Trägermittelpunkt (T) ausgehenden radialen Strahlen ($S_1$, $S_2$), die einen stumpfen Winkel ($\alpha$) einschließen.
b) Von den in den einander überdeckenden Bereichen der beiden Außenkurven (27,28) gebildeten Zähnen (36,37,38,39), mit denen jeweils gleichzeitig die Eingriffsglieder (23,24,25,26) beider Sätze zusammenwirken, liegen die schmaleren Zähne (36,37) innerhalb des stumpfen Winkels ($\alpha$).

15. Etikettierstation nach Anspruch 13,
**dadurch gekennzeichnet,** daß der stumpfe Winkel ($\alpha$) 120° bis 160°, insbesondere 140° beträgt.

16. Etikettierstation nach Anspruch 14 oder 15,
**dadurch gekennzeichnet,** daß die Extrempunkte (30,32) auf der anderen Außenkurve (27) auf einer annähernd durch den Trägermittelpunkt (T) verlaufenden Geraden (G) liegen.

17. Etikettierstation nach einem der Ansprüche 1 bis 16,
**dadurch gekennzeichnet,** daß der Abstand (c,d) der Abstützpunkte der Eingriffsglieder (23,24,25,26) an den Flanken eines von den einander überdeckenden Bereichen der beiden Außenkurven (27,28) gebildeten schmalen Zahns (36,37) bei senkrechter Lage der durch die Mittelpunkte der am Zahn (36,37) abgestützten Eingriffsglieder (23,24,25,26) verlaufenden Verbindungslinie zu der vom Trägermittelpunkt (T) ausgehenden und durch die Spitze des Zahns (36,37) verlaufenden radialen Strahls ($R_1$,$R_2$) um 30 bis 40 % kleiner als der entsprechende Abstand (e,f) bei einem entsprechenden breiten Zahn (38,39) ist.

18. Etikettierstation nach Anspruch 17,
**dadurch gekennzeichnet,** daß die Extrempunkte (30,31,32,33) auf einem Kreis (34) um den Trägermittelpunkt (T) liegen.

19. Etikettierstation nach Anspruch 18,
**dadurch gekennzeichnet,** daß die innerhalb des Kreises (34) für die Extrempunkte (30,31,32,33) liegenden Spitzen der von den einander überdeckenden Bereichen der Außenkurven (27,28) gebildeten Zähne (36,37,38,39) von dem Kreisbeziehungsweise Trägermittelpunkt (T) einen unterschiedlichen radialen Abstand haben.

20. Etikettierstation nach einem der Ansprüche 1 bis 19,
**dadurch gekennzeichnet,** daß der radiale Abstand der Spitzen der von den überdeckenden Bereichen der beiden Außenkurven (27,28) gebildeten schmalen Zähne (36,37) vom Trägermittelpunkt (T) gleich ist.

21. Etikettierstation nach einem der Ansprüche 1 bis 20,
**dadurch gekennzeichnet,** daß der radiale Abstand der Spitzen der von den überdeckenden Bereichen der beiden Außenkurven (27,28) gebildeten breiten Zähne (38,39) vom Trägermittelpunkt (T) etwa gleich ist.

22. Etikettierstation nach einem der Ansprüche 1 bis 21,
**dadurch gekennzeichnet,** daß der radiale Abstand der Spitzen der von den überdeckenden Bereichen der beiden Außenkurven (27,28) gebildeten schmalen Zähne (36,37) größer als der der breiten Zähne (38,39) ist.

23. Etikettierstation nach einem der Ansprüche 1 bis 22,
**dadurch gekennzeichnet,** daß aufgrund des Verlaufs der beiden Außenkurven (27,28) die Winkelgeschwindigkeit eines jeden Entnahmeleementes (2,3,4) im Abwälzbereich der Stationen (12,13,14) nur ein Maximum und in den dazwischenliegenden Zwischenbereichen nur ein Minimum erreicht.

24. Etikettierstation nach Anspruch 23,
**dadurch gekennzeichnet,** daß die Maxima und Minima der Winkelgeschwindigkeit jeweils etwa in der Mitte des Abwälzbereichs bzw. des Zwischenbereichs liegen.

25. Etikettierstation nach Anspruch 23 oder 24,
**dadurch gekennzeichnet,** daß die minimale Winkelgeschwindigkeit in den Zwischenbereichen kleiner als die halbe maximale Winkelgeschwindigkeit in den Abwälzbereichen ist.

26. Etikettierstation nach einem der Ansprüche 23 bis 25,
**dadurch gekennzeichnet,** daß die Winkelgeschwindigkeit im Bereich des Greiferzylinders (14) am größten ist.

27. Etikettierstation nach einem der Ansprüche 23 bis 26,
**dadurch gekennzeichnet,** daß die Drehbewegung eines jeden Entnahmeelementes (2,3,4) in mindestens einem Zwischenbereich bis auf mindestens 0 verzögert und anschließend wieder bis auf die Abwälzgeschwindigkeit beschleunigt wird.

## Claims

1. Labelling station for articles, more especially for bottles, including a plurality of stations disposed behind one another along a path, such stations being a gluing device (12), a label supplying station (13) and a label transferring station (14), as well as at least one extracting member (2, 3, 4) for extracting the labels, which member is rotatably mounted on a rotating carrier (1) and travels past the stations (12, 13, 14) during every rotation of the carrier (1), said extracting member having an outwardly curved receiving face (2', 3', 4') for receiving the label, said face passing the stations (12, 13, 14), a cam gear being provided as the driving means for driving every extracting member (2, 3, 4), which gear comprises a stationary double cam plate (53), which is common to all of the extracting members (2, 3, 4) and has unilateral cams (27, 28) disposed in two planes one above the other and with a spacing therebetween, and two sets of engagement members (23, 24, 25, 26), which are mounted on the driving shaft (6, 7, 8) or on a bearing shaft (50), connected thereto, by means of a carrier element (51) and ensure the positive actuation of each extracting member (2, 3, 4) throughout its entire rotary movement as a result of the form-locking arrangement with the two cams (27, 28) during rotation of the carrier (1), characterised in that the driving or bearing shaft (50) terminates before the plane, in which is situated the first cam (28) which lies closer to this shaft (50), and in that the engagement members (23, 24), which are associated with the other, second cam (27), are mounted on a bridging member (52), which is situated between the two cams (27, 28) and is supported by spacer members (25a, 26a), which are retained on the carrier element (51) and are situated externally of the region (56) over which the first cam (28) sweeps.

2. Labelling station according to claim 1, characterised in that the engagement members (25, 26) of the first cam (28) surround the spacer members (25a, 26a).

3. Labelling station according to claim 1 or 2, characterised in that two engagement members (23, 24, 25, 26) are associated with each set and are disposed opposite each other relative to the axis of the driving or bearing shaft (50), the engagement members (23, 24) of one set being rotationally offset from the engagement members (25, 26) of the other set by 90°.

4. Labelling station according to one of claims 1 to 3, characterised in that, if the engagement members (25, 26) have journals (25a, 26a), the bridging member (52) is supported on one side by the journals (25a, 26a) associated with the first cam (28) and supports the journals (23a, 24a) associated with the second cam (27) on its other side.

5.    Labelling station according to claim 4, characterised in that rollers (23b, 24b, 25b, 26b) are mounted on the journals (23a, 24a, 25a, 26a).

6.    Labelling station according to one of claims 1 to 5, characterised in that the double cam plate (53), which is provided with external cams (27, 28), is disposed internally of the circular path with the engagement members (23, 24, 25, 26) and is connected to the frame (55) of the machine through the intermediary of a bridge support (54), which is disposed beneath the engagement members (23, 24, 25, 26).

7.    Labelling station according to one of claims 1 to 6, characterised in that the carrier element (51) for the engagement members (23, 24, 25, 26) includes an outer body (51a), which supports the engagement members (23, 24, 25, 26), and an inner body (51b), which is connected thereto through the intermediary of an insert layer (51c) formed from resilient damping material, the two bodies (51a, 51b) engaging in each other in a form-locking manner in the region of the insert layer (51c) with radially orientated claws.

8.    Labelling station according to claim 7, characterised in that the outer body (51a), which supports the engagement members (23, 24, 25, 26), is provided with a driving pinion (20).

9.    Labelling station according to one of claims 1 to 8, characterised in that, of the radial extreme points (30, 31, 32, 33) of the two external cams (27, 28), two extreme points (30, 31) lie in the sector situated between the gripper cylinder (14) and the gluing roller (12), and one particular extreme point (32, 33) lies in each of the sectors situated between the label transferring station, which is adapted as the gripper cylinder (14), the label supplying station, which is adapted as the box of labels (11), and the gluing device, which is adapted as the gluing roller (10).

10.    Labelling station according to one of claims 1 to 9, characterised in that at least one of the extreme points (30, 31, 32, 33) of the two external cams (27, 28) lies externally of the central path (34) of the carrier element (51) for the engagement members (23, 24, 25, 26).

11.    Labelling station according to one of claims 1 to 10, characterised in that, if a transmission gear is disposed between the driving shaft (6) of the extracting member (2) and the carrier element (51), more especially with a transmission ratio of 1 : 3, and if the axis of the driving shaft (6) of the extracting member (2) is disposed externally of the central path (34) of the carrier element (51), and if the extracting member is in its central position before the label supplying station, which is adapted as the box of labels (11), a pair of engagement members (23, 24) having the two engagement members (23, 24) is in engagement with the external cam (27).

12.    Labelling station according to one of claims 1 to 11, characterised in that the ratio of the radius (a) of the central path (34) of the carrier element (51) relative to the radius (b) of the running circle of the engagement members (23, 24, 25, 26) on the carrier element (51) is 3 : 1.

13.    Labelling station according to one of claims 1 to 12, characterised in that the non-supporting cam track portions of the cams (27, 28), described by the engagement members (23, 24, 25, 26), lie mainly externally of the central path (5) of the driving shaft (6) for the extracting member (2).

14.    Labelling station according to one of claims 1 to 13, characterised by the following features:
a) the extreme points (31, 33) on one of the two external cams (27, 28) lie on radial lines $(S_1, S_2)$, which extend from the centre (T) of the carrier and subtend an obtuse angle $(\alpha)$;
b) of the teeth (36, 37, 38, 39), which are formed by the regions of the two external cams (27, 28) covering one another and with which the engagement members (23, 24, 25, 26) of both sets simultaneously cooperate, the narrower teeth (36, 37) lie within the obtuse angle $(\alpha)$.

15.    Labelling station according to claim 13, characterised in that the obtuse angle $(\alpha)$ is 120° to 160°, more especially 140°.

16.    Labelling station according to claim 14 or 15, characterised in that the extreme points (30, 32) on the other external cam (27) lie on a straight line (G), which extends approximately through the centre (T) of the carrier.

17.    Labelling station according to one of claims 1 to 16, characterised in that the spacing (c, d) between the supporting points of the engagement members (23, 24, 25, 26) at the sides of a narrow tooth (36, 37), which is formed by the regions of the two external cams (27, 28) covering one another, when the connecting line which extends through the centres of the engagement members (23, 24, 25, 26), which are supported on the tooth (36, 37), lies perpendicular to the radial line ($R_1$, $R_2$), which issues from the centre (T) of the carrier and extends through the tip of the tooth (36, 37), is 30 % to 40 % smaller than the corresponding spacing (e, f) with a corresponding, wide tooth (38, 39).

18. Labelling station according to claim 17, characterised in that the extreme points (30, 31, 32, 33) lie in a circle (34) around the centre (T) of the carrier.

19. Labelling station according to claim 18, characterised in that the tips lying internally of the circle (34) for the extreme points (30, 31, 32, 33) of the teeth (36, 37, 38, 39), formed by the regions of the external cams (27, 28) covering one another, have a different, radial spacing from the centre (T) of the circle or carrier respectively.

20. Labelling station according to one of claims 1 to 19, characterised in that the radial spacing between the tips of the narrow teeth (36, 37), which are formed by the covering regions of the two external cams (27,28), and the centre (T) of the carrier is identical.

21. Labelling station according to one of claims 1 to 20, characterised in that the radial spacing between the tips of the wide teeth (38, 39), which are formed by the covering regions of the two external cams (27, 28), and the centre (T) of the carrier is substantially identical.

22. Labelling station according to one of claims 1 to 21, characterised in that the radial spacing between the tips of the narrow teeth (36, 37), which are formed by the covering regions of the two external cams (27, 28), is greater than that of the narrow teeth (38, 39).

23. Labelling station according to one of claims 1 to 22, characterised in that, due to the configuration of the two external cams (27, 28), the angular velocity of each extracting member (2, 3, 4) only reaches a maximum in the rolling region of the stations (12, 13, 14) and only reaches a minimum in the intermediate regions situated therebetween.

24. Labelling station according to claim 23, characterised in that the maxima and minima of the angular velocity lie substantially in the centre of the rolling region and in the centre of the intermediate region respectively.

25. Labelling station according to claim 23 or 24, characterised in that the minimum angular velocity in the intermediate regions is smaller than half the maximum angular velocity in the rolling regions.

26. Labelling station according to one of claims 23 to 25, characterised in that the greatest angular velocity is in the region of the gripper cylinder (14).

27. Labelling station according to one of claims 23 to 26, characterised in that the rotary movement of each extracting member (2, 3, 4) in at least one intermediate region is retarded to at least 0 and is subsequently accelerated again up to the rolling velocity.

**Revendications**

1. Poste d'étiquetage pour objets, en particulier des bouteilles, comportant plusieurs postes disposés le long d'une trajectoire, à savoir un dispositif d'encollage (12), un poste de stockage d'étiquettes (13), et un poste de transfert d'étiquettes (14), ainsi qu'au moins un organe de prélèvement (2, 3, 4) pour les étiquettes, monté rotatif sur un support tournant (1) et déplacé le long des postes (12, 13, 14) à chaque rotation du support (1), présentant respectivement une surface réceptrice (2', 3', 4') pour l'étiquette, incurvée vers l'extérieur, entraînée à rouler le long des postes (12, 13, 14), une commande à cames étant prévue pour entraîner chaque organe de prélèvement (2, 3, 4), composée d'un disque à deux cames (53) fixe, commun pour tous les organes de prélèvement (2, 3, 4), avec deux cames (27, 28) agissant unilatéralement disposées l'une audessus de l'autre sur deux plans, et à distance l'une de l'autre, et composée de deux ensembles d'organes de contact (23, 24, 25, 26) qui sont disposés sur l'arbre moteur (6, 7, 8) ou sur un arbre support (50) et accouplés à lui par l'intermédiaire d'un élément support (51), et qui assurent, grâce à une liaison positive avec les deux cames (27, 28), lors de la rotation du support (1), le mouvement forcé de chaque organe de prélèvement (2, 3, 4) sur la rotation complète du support, caractérisé en ce que l'arbre d'entraînement et/ou l'arbre support (50) se termine avant le plan dans lequel la première came (28) la plus proche de cet arbre (50) se situe, et en ce que les organes de contact (23, 24) associés à la deuxième came (27) sont disposés sur un organe en pont (52) situé entre les deux cames (27, 28), porté par des éléments d'écartement (25a, 26a) maintenus sur l'élément support (51) disposés à l'extérieur de la zone (56) couverte par la première came (28).

2. Poste d'étiquetage selon la revendication 1, caractérisé en ce que les organes de contact (25, 26) de la première came (28) comprennent les éléments d'écartement (25a, 26a).

3. Poste d'étiquetage selon la revendication 1 ou 2, caractérisé en ce qu'à chaque ensemble sont associés deux organes de contact (23, 24, 25, 26) diamétralement opposés par rapport à l'axe de l'arbre d'entraînement ou support (50), les organes de contact (23, 24) du premier ensemble étant décalés de 90° par rapport aux organes de contact (25, 26) de l'autre ensemble.

4. Poste d'étiquetage selon l'une des revendications 1 à 3, caractérisé en ce que, lorsque les organes de contact (25, 26) présentent des tourillons (25a, 26a), l'organe en pont (52) est porté, sur l'un de ses côtés, par les tourillons (25a, 26a) associés à la première came (28), et porte, sur son autre côté, les tourillons (23a, 24a) associés à la deuxième came (27).

5. Poste d'étiquetage selon la revendication 4, caractérisé en ce que des galets (23b, 24b, 25b, 26b) sont disposés sur les tourillons (23a, 24a, 25a, 26a).

6. Poste d'étiquetage selon l'une des revendications 1 à 5, caractérisé en ce que le disque à deux cames (53) pourvu de cames extérieures (27, 28) est disposé à l'intérieur de la trajectoire circulaire avec les organes de contact (23, 24, 25, 26) et est relié au bâti de la machine (55) par un pont de support (54) situé en-dessous des organes de contact (23, 24, 25, 26).

7. Poste d'étiquetage selon l'une des revendications 1 à 6, caractérisé en ce que l'élément porteur (51) des organes de contact (23, 24, 25, 26) se compose d'un corps extérieur (51a) portant les organes de contact (23, 24, 25, 26) et d'un corps intérieur (51b) lié à ce dernier par l'intermédiaire d'une garniture (51c) en matériau amortisseur élastique, les deux corps (51a, 51b) engrenant l'un dans l'autre de façon positive dans la zone de la garniture (51c) par des griffes orientées radialement.

8. Poste d'étiquetage selon la revendication 7, caractérisé en ce que le corps extérieur (51a) portant les organes de contact (23, 24, 25, 26) porte un pignon d'entraînement (20).

9. Poste d'étiquetage selon l'une des revendications 1 à 8, caractérisé en ce que parmi les points extrèmes radiaux (30, 31, 32, 33) des deux cames extérieures (27, 28), deux points extrèmes (30, 31) se situent dans le secteur compris entre le cylindre preneur (14) et le rouleau encolleur (12), et respectivement un point extrème (32, 33) se situe dans les secteurs compris entre le poste de transfert d'étiquettes conformé en cylindre preneur (14), le poste de stockage d'étiquettes conformé en boîte d'étiquettes (13) et le dispositif d'encollage conformé en rouleau encolleur (12).

10. Poste d'étiquetage selon l'une des revendications 1 à 9, caractérisé en ce qu'au moins un des points extrèmes (30, 31, 32, 33) des deux cames extérieures (27, 28) se situe en dehors de la trajectoire du point central (34) de l'élément porteur (51) des organes de contact (23, 24, 25, 26).

11. Poste d'étiquetage selon l'une des revendications 1 à 10, caractérisé en ce que, lorsqu'un mécanisme de transmission est prévu entre l'arbre moteur (6) de l'organe de prélèvement (2) et l'élément porteur (51), en particulier dans le cas d'un rapport de transmission de 1 à 3, et lorsque l'axe de l'arbre d'entraînement (6) de l'organe de prélèvement (2) est prévu en-dehors de la trajectoire du point central (34) de l'élément porteur (51), et lorsque l'organe de prélèvement se trouve en position médiane devant le poste de stockage d'étiquettes conformé en boite d'étiquettes (13), une paire d'organes de contact (23, 24) est en contact avec la came extérieure (27) par les deux organes de contact (23, 24).

12. Poste d'étiquetage selon l'une des revendications 1 à 11, caractérisé en ce que le rapport entre le rayon (a) de la trajectoire du point central (34) de l'élément porteur (51) et le rayon (b) du cercle parcouru par les organes de contact (23, 24, 25, 26) sur l'élément porteur (51) s'élève à 3/1.

13. Poste d'étiquetage selon l'une des revendications 1 à 12, caractérisé en ce que les portions de trajectoire de cames non porteuses, des cames (27, 28), décrites par les organes de contact (23, 24, 25, 26) se situent en grande partie en dehors de la trajectoire du point central (5) de l'arbre d'entraînement (6) de l'organe de prélèvement (2).

14. Poste d'étiquetage selon l'une des revendications 1 à 13, caractérisé par les caractéristiques suivantes :

a) Les points extrèmes (31, 33) sur l'une des deux cames extérieures (27, 28) se situent sur des lignes radiales ($S_1$, $S_2$) partant du point central du support (T), qui forment un angle obtus ($\alpha$).

b) Parmi les dents (36, 37, 38, 39) formées dans les zones superposées des deux cames extérieures (27, 28), avec lesquelles les organes de contact (23, 24, 25, 26) des deux ensembles coopèrent respectivement simultanément, les dents les plus étroites (36, 37) se situent à l'intérieur de l'angle obtus ($\alpha$).

15. Poste d'étiquetage selon la revendication 13, caractérisé en ce que l'angle obtus ($\alpha$) est compris entre 120° et 160°, en particulier 140°.

16. Poste d'étiquetage selon la revendication 14 ou 15, caractérisé en ce que les points extrèmes (30, 32) sur l'autre came extérieure (27) se situent sur une droite (G) passant approximativement par le point central du support (T).

17. Poste d'étiquetage selon l'une des revendications 1 à 16, caractérisé en ce que l'écart (c, d) entre les points d'appui des organes de contact (23, 24, 25, 26) sur les flancs d'une dent (36, 37) étroite formée par les zones superposées des deux cames extérieures (27, 28), dans le cas d'une disposition perpendiculaire d'une ligne de jonction, passant par les points centraux des organes de contact (23, 24, 25, 26) s'appuyant sur la dent (36, 37), par rapport à la ligne radiale ($R_1$, $R_2$) partant du point central du support (T) et passant par le sommet de la dent, est inférieur de 30 à 40 % à l'écart correspondant (e, f) existant dans le cas d'une dent large (38, 39) correspondante.

18. Poste d'étiquetage selon la revendication 17, caractérisé en ce que les points extrèmes (30, 31, 32, 33) se situent sur un cercle (34) entourant le point central du support (T).

19. Poste d'étiquetage selon la revendication 18, caractérisé en ce que les sommets, pour les points extrèmes (30, 31, 32, 33) situés à l'intérieur du cercle (34), des dents (36, 37, 38, 39) formées par les zones superposées des cames extérieures (27, 28) présentent un écart radial différent du point central (T) du support et/ou du cercle.

20. Poste d'étiquetage selon l'une des revendications 1 à 19, caractérisé en ce que l'écart radial entre les sommets des dents étroites (36, 37) formées par les zones superposées des deux cames extérieures (27, 28) par rapport au point central du support (T) est le même.

21. Poste d'étiquetage selon l'une des revendications 1 à 20, caractérisé en ce que l'écart radial entre les sommets des dents larges (38, 39) formées par les zones superposées des deux cames extérieures (27, 28) par rapport au point central du support (T) est sensiblement le même.

22. Poste d'étiquetage selon l'une des revendications 1 à 21, caractérisé en ce que l'écart radial entre les sommets des dents étroites (36, 37) formées par les zones superposées des deux cames extérieures (27, 28), est supérieur à l'écart entre les sommets des dents larges (38, 39).

23. Poste d'étiquetage selon l'une des revendications 1 à 22, caractérisé en ce que, du fait du tracé des deux cames extérieures (27, 28), la vitesse angulaire de chaque organe de prélèvement (2, 3, 4) n'atteint qu'un maximum dans la zone de roulement des postes (12, 13, 14), et n'atteint qu'un minimum dans les espaces intermédiaires situés entre eux.

24. Poste d'étiquetage selon la revendication 23, caractérisé en ce que les maxima et les minima de la vitesse angulaire se situent respectivement approximativement au milieu de la zone de roulement et/ou de l'espace intermédiaire.

25. Poste d'étiquetage selon la revendication 23 ou 24, caractérisé en ce que la vitesse angulaire minimale dans les espaces intermédiaires est plus faible que la moitié de la vitesse angulaire maximale dans les zones de roulement.

26. Poste d'étiquetage selon l'une des revendications 23 à 25, caractérisé en ce que la vitesse angulaire est la plus grande dans la zone du cylindre preneur (14).

27. Poste d'étiquetage selon l'une des revendications 23 à 26, caractérisé en ce que le mouvement de rotation de chaque organe de prélèvement (2, 3, 4), dans au moins un espace intermédiaire, est ralenti jusqu'à au moins 0, et est accéléré ensuite à nouveau jusqu'à la vitesse de roulement.

Fig.1

Fig.2

Fig.3

Fig. 4

Fig. 5

Fig. 6

Fig. 7

Fig. 8

Fig. 9

Fig. 10